(19) Europäisches Patentamt / European Patent Office / Office européen des brevets

(11) **EP 2 866 589 B1**

(12) **EUROPEAN PATENT SPECIFICATION**

(45) Date of publication and mention
of the grant of the patent:
**21.12.2016 Bulletin 2016/51**

(21) Application number: **13727908.9**

(22) Date of filing: **11.06.2013**

(51) Int Cl.:
*A23L 23/00* (2016.01)  *A23L 23/10* (2016.01)
*A23L 27/60* (2016.01)  *A23L 29/231* (2016.01)

(86) International application number:
**PCT/EP2013/061974**

(87) International publication number:
**WO 2014/005801 (09.01.2014 Gazette 2014/02)**

(54) **CONCENTRATE FOOD COMPOSITION IN THE FORM OF A GEL**

LEBENSMITTELKONZENTRAT IN FORM EINES PEKTINGELS

CONCENTRÉ ALIMENTAIRE GÉLIFIÉ CONTENANT UN GEL DE LA PECTINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2012 EP 12174651**

(43) Date of publication of application:
**06.05.2015 Bulletin 2015/19**

(73) Proprietors:
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London, Greater London EC4Y 0DY (GB)**
Designated Contracting States:
**CY GB IE MT**

(72) Inventors:
• **SILVA PAES, Sabrina
NL-3133 AT Vlaardingen (NL)**
• **BOUWENS, Elisabeth, Cornelia, Maria
NL-3133AT Vlaardingen (NL)**
• **MELLEMA, Michel
NL-3133 AT Vlaardingen (NL)**

(74) Representative: **Tjon, Hon Kong Guno
Unilever N.V.
Unilever Patent Group
Olivier van Noortlaan 120
3133 AT  Vlaardingen (NL)**

(56) References cited:
**EP-A1- 2 468 110        WO-A1-97/10726
WO-A1-99/18813        WO-A1-02/078465
US-A1- 2005 084 601**

• **SANG-HO YOO ET AL: "Monovalent Salt-Induced Gelation of Enzymatically Deesterified Pectin", JOURNAL OF AGRICULTURAL AND FOOD CHEMISTRY, vol. 51, no. 25, 1 December 2003 (2003-12-01), pages 7410-7417, XP055038900, ISSN: 0021-8561, DOI: 10.1021/jf030152o**

EP 2 866 589 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a concentrate food composition comprising water, salt and pectin. It further relates to a process to prepare the same. It further relates to the use of said composition for preparing a bouillon, a soup, a sauce, a gravy or a seasoned dish.

## Background of the invention

High-salt concentrated food compositions which after dilution in water or a dish result in a bouillon, a soup, a sauce or a gravy or a seasoned dish have been described. This class of products is known to the consumer as well as to the skilled person for many decades. They are known for example in the form of bouillon cubes, soup cubes or seasoning cubes. Concentrate products can be dry (e.g. dehydrated), liquid, or paste-like products which, after the addition to water according to the directions for use, yield ready to eat preparations.

Recently, savoury concentrate food compositions became available which are in the form of a self-sustaining semi-solid gel. Compared to traditional dry concentrates like bouillon cubes, these gelled concentrates can contain more water and are considered to have a more fresh appearance, while still having a high-salt level, e.g. to allow high dilution ratios while maintaining a desired taste impact. Compared to liquid concentrates, the gelled concentrates show the advantage that they are sufficiently firm (also sometimes referred to in the art as self-sustaining, shape-stable, soft-solid or semi-solid), and non-sticky and therefore can be unit dosed, like a traditional bouillon cube.

Gelled concentrates rely for their firm, semi-solid, gelled texture on the presence of a gelling agent. A gelling agent can comprise one or more gelling and/or thickening agents which together provide the semi-solid firm gel texture. For the application in high-salt food concentrates, the gelling agent should be compatible with high-salt levels. Most gelling agents that can form a semi-solid gel in food products which are ready to eat (low salt levels) appeared to be not compatible with very high-salt levels, such as common in savoury concentrate food compositions. At these high-salt levels many gelling agents appeared to behave very different than they do at low salt levels. In a high salt environment they might lose their texturing ability or often do not form a gel at all, or show significant disadvantages which make production of savoury high-salt gels at industrial scale far from attractive, if not impossible.

WO2007/068484 describes a savoury gelled concentrate comprising a gelling agent which contains a mixture of xanthan gum and locust bean gum. EP2468110 describes a food composition comprising low-methoxy pectin. Despite this development of gelled concentrate food compositions which could be produced with the required high-salt level, it was experienced that the discovered gelling agents which are compatible with such high-salt levels are sometimes not recognised as sufficiently natural by the consumer and result in a "non-clean label" declaration on the packaging, and show other disadvantages as well. WO99/18813 discloses a process for preparing a fruit- or vegetable-based product wherein pectin methylesterase, and optionally pectin, are added to a fruit-or vegetable paste, incubating said mixture, optionally followed by inactivating said mixture. To said mixture is added a hydrocolloid.

A disadvantage that was observed with many, if not all, of the gelled concentrate food compositions as currently available, is the phenomenon that when the concentrate composition is diluted, for example to make a bouillon or a soup, this diluted composition shows an undesired considerable increase in viscosity (or even gels) when it stands for a while and gradually cools down to temperatures such as 50 or 40 °C, or lower. In a seasoned dish that has cooled down an undesired stickiness or lumping in the dish may be observed. This clearly can give a non-desired appearance that is sometimes interpreted as "artificial" by a consumer, as it does not sufficiently reflect the behaviour of a homemade bouillon, soup or meal etc.

A further problem observed with available concentrate food compositions in the form of a gel is that it is cumbersome to spoon out part of the gel from its packaging, as it may be too elastic. This obviously does not reflect the situation of "natural", easy-spoonable gels that may result from solidified home-made bouillons, soups or gravy products. An easy and more natural spoonability of the concentrate food composition becomes especially relevant when the consumer wants to use only part the concentrate to prepare his dish, or when a multidosage packaging is used.

## Summary of the invention

The aim of the present invention is to provide a concentrate food composition for example to provide a bouillon, soup, sauce, gravy or to season a meal, which concentrate food composition is in the form of a gel at room temperature and which is shape-stable at high-salt levels, in this way allowing the conventional dilution ratios as used for concentrate food compositions like bouillon cubes, soup cubes, or seasoning products, (e.g. 5 to 50 times by weight). The aim of the invention is to provide these concentrate food compositions wherein the increase in viscosity upon cooling of the diluted concentrate food composition is very low, preferably is negligible. Further it is desired that the spoonability of the concentrate food composition is relatively easy and natural.

A further aim of the present invention is to provide a process to produce a food composition of the invention which is stable at high-salt content and which is in the form of a semi-solid gel at room temperature. Preferably, the amount of gelling agent present in the resulting concentrate food composition is relatively low and the amounts of gelling agent added to the ingredients mixture during preparation are consequently relatively low. It is a further aim of the present invention to provide a process to prepare a savoury food concentrate in the form of a gel that allows the use of vegetables and fruits to prepare a gel and wherein the use of additional gums or starch is not required.

Surprisingly, these aims were met by a concentrate food composition in the form of a gel comprising:

- water,
- sodium salt and optionally potassium salt in a total amount of from 5 wt% to 40 wt%, based on the total water content of the food composition, wherein the amount of salt is calculated as ((weight of salt)/(weight of salt + weight of total water content))*100 in %,
- comminuted plant material,
- from 0.3 to 10 wt% of pectin based on the total water content of the food composition, pectin being all pectin with a degree of esterification of lower than 55%, wherein the amount of said pectin is measured as the amount of galacturonic acid (GalA), and is calculated as ((weight of GalA)/(weight of GalA + weight of total water content))*100 in %,
- calcium salt,

wherein part of said pectin is bound to said comminuted plant material, and part of said pectin is not bound to said comminuted plant material (free pectin) and said free pectin and said bound pectin are present in a ratio of from 0.2 to 200.

In a further aspect the present invention relates to a process to prepare a concentrate food composition according to the invention, the process comprising the steps of:

a) Providing comminuted plant material which has been heated,
b) Adding pectin methylesterase (PME) to the comminuted plant material and_allowing to incubate,
c) Inactivating the pectin methylesterase after step b),
d) Adding sodium salt and optionally potassium salt,
e) Adding calcium salt,
f) Packaging and allowing to solidify,

wherein the process further comprises at least one of the following steps:

- adjusting the pH of the comminuted plant material to a pH of between 1 and 3, wherein this step is carried out before inactivation step c),
- adding pectin with a degree of esterification of below 55% and which is not bound to comminuted plant material,
- adding pectin with a degree of esterification of above 55% and which is not bound to comminuted plant material, wherein this step is carried out before step b).

to obtain a concentrate food composition in the form of a gel.

In a further aspect the present invention relates to the use of a food composition of the present invention to prepare a bouillon, a soup, a sauce, a gravy or a seasoned dish.

**Detailed description of the invention**

Food composition

The food composition of the present invention is in the form of a semi-solid gel. It is not a paste. Preferably the gel is a self-sustaining gel. A semi-solid gel is known to the person skilled in the art of gelled concentrate food compositions. A semi-solid gel texture allows the consumer of the food composition to remove the food composition from its packaging easily and in one piece. This is referred to in the field as unit dosing, an advantage shared with traditional, dry bouillon cubes. Such a semi-solid gel may allow making easy scoops for example with a spoon, which may be preferred for multi-dosage packagings. The semi-solid, preferably self-sustaining gel texture is present at least at room temperature (20°C). The semi-solid gel texture prevents that the food composition flows apart during or after removal from its packaging, like a liquid or a paste, and allows it to maintain the shape, which at least to a certain extent reflects the shape the product had when present in its packaging. The product is preferably not sticky, such as a paste (for example tomato paste). The gel is preferably not very elastic, to allow easy scooping with for example a spoon.

The texture of the semi-solid gel can for example be analysed by a texture analyser, as known in the art. The texture can be characterised for example using common techniques such as texture analysis of penetration and compression, as measured in a penetration test, with equipments such as a Texture Analyser (e.g. from Stable Microsystems™) or a Universal testing machine (e.g. from Instron™).

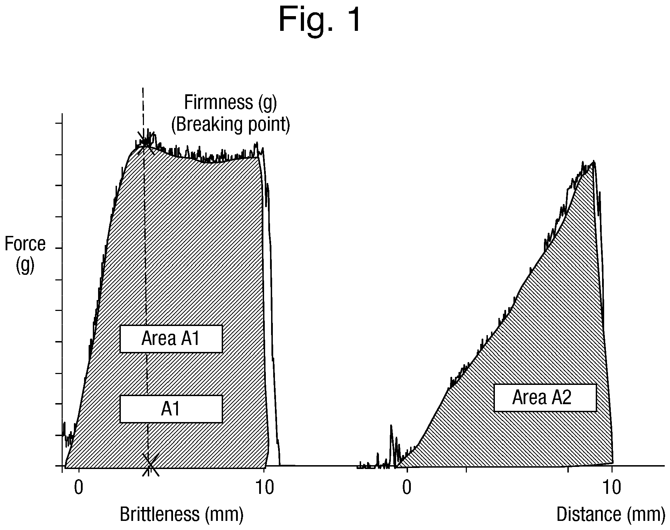

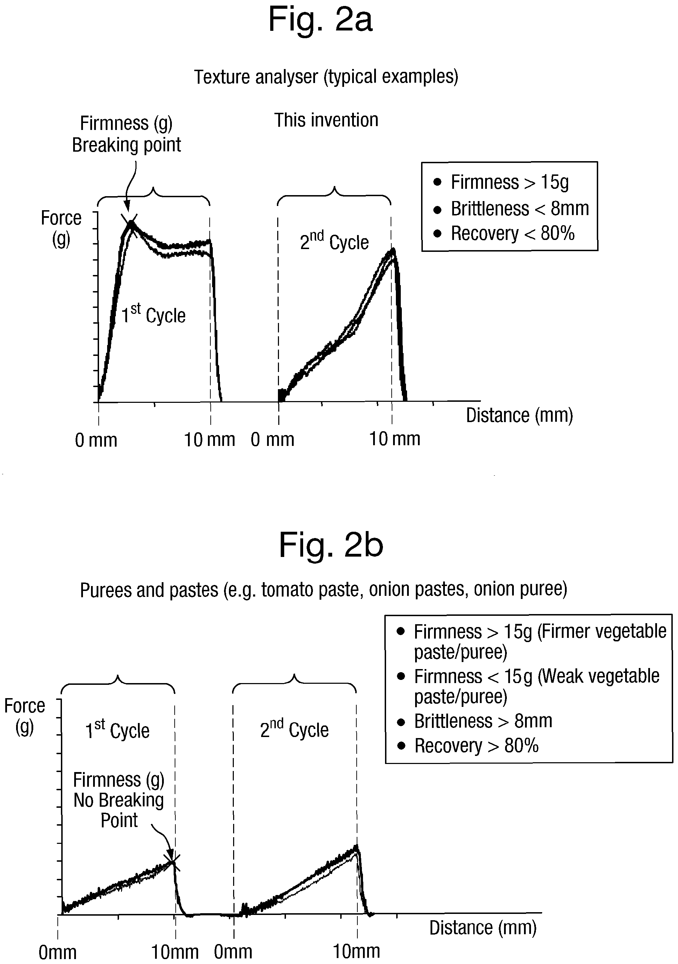

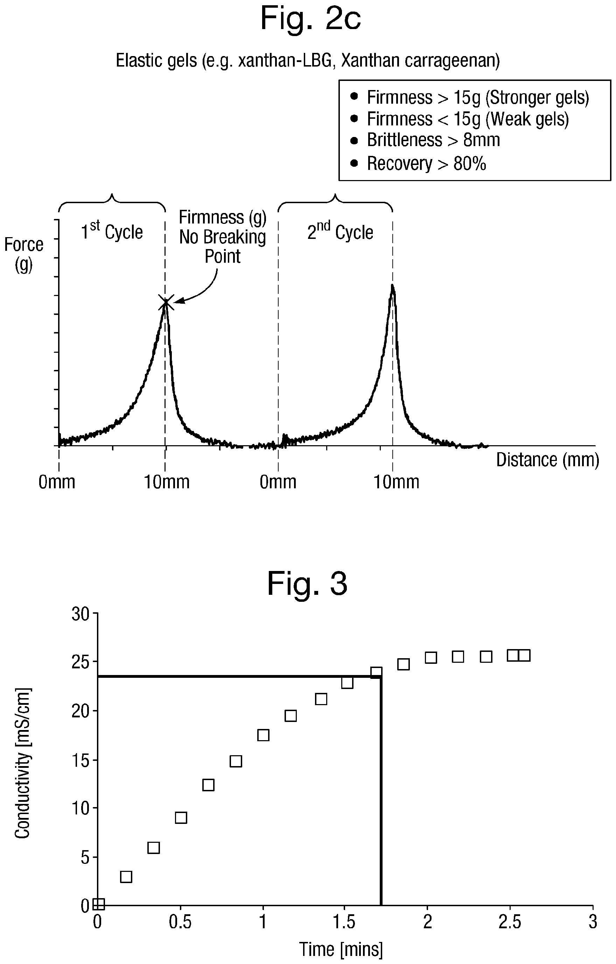

In a "penetration test", a plunger is forced into a composition and the force required for penetration of the composition is plotted against the distance (or time) of penetration into the composition at a pre-determined speed to a pre-determined depth of penetration. The plunger is then withdrawn. In the test used in the context of this invention two consecutive penetrations was used. If a composition is in the form of a (brittle) semi-solid gel (as preferred in this invention) it typically shows a breaking point (or irreversible deformation, e.g. yield) in the first penetration, and the maximum force is reached, indicating the "product firmness". If a composition is in the form of a paste or a very elastic gel, the product firmness (maximum force) is commonly observed at the maximum distance (depth) of penetration. The area under the force *versus* distance curve of the first penetration defines the area in the graph A1 of Figure 1. Then the plunger is forced into the composition for a second time, and again the force is plotted against the distance (or time). This part of the graph defines area A2. A typical force *versus* distance curve resulting from this penetration test on a semi-solid gel according to the invention has been indicated in Figure 2a and compared to test curves representing purees or pastes (e.g. vegetable purees and pastes) (Figure 2b) and elastic gels which are known in the prior art (e.g. xanthan-LBG gel compositions) (Figure 2c).

For this invention, the following set up is used to characterise the gel texture:

Test type: Penetration test with 2 cycles:

a. The measurements are performed after at least 12h maturation time after the samples are prepared and gelled (solidified). A longer maturation time of for example 24h to 48h is preferred.

b. The samples are equilibrated to room temperature for at least 2h, prior to measurement.

c. The machine and sample container specifications are as follows:

- Container (125 ml propylene cup), 52 millimeters diameter
- Sample height: at least 25 millimeters
- Equipment: Texture Analyser Stable Microsystems (or similar)
- Probe: 1/2 inch cylinder, smooth edges (P/0.5 - 0.5 inch diameter cylinder probe, Delrin)
- Test set up (adapted from application notes REF: GL3/P05R, stable micro systems, Revised: March 2006). The following settings are used:

- Load cell: 30kg
- Compression mode, 2 cycles
- Pre-test speed =10 millimeters/second
- Test speed =5 millimeters/second
- Post-test speed=10 millimeters/second
- Trigger force = 3g
- Penetration depth=10 millimeters (measurement error can be typically of 0.1-0.2 mm).

d. Values of parameters below are presented as average and with a standard deviation of at least duplicates.

The following relevant parameters are used to characterise the gels according to this invention and are measured using a penetration test with 2 cycles with a texture analyser according to the method as described above:

Firmness: The composition of the invention is not liquid, but has a semi-solid texture with certain firmness. The firmness is determined as the maximum force (or breaking point) in the penetration first cycle (expressed in g). For a semi-solid gel as in this invention, the maximum force (firmness) is typically observed as a breaking point much before complete penetration depth (distance is less than the penetration dept, which is 10mm). In the composition of the present invention, the firmness (in g) is preferably higher 15 g, more preferably higher than 20 g, even more preferably higher than 30 g, most preferably higher than 40 g. The firmness is preferably less than 1000 g, more preferably less than 700 g, even more preferably less than 500 g.

Brittleness: Gels of the invention are preferably brittle gels. It is preferred that the gels have a certain brittleness so they are easier to spoon and easy to disperse in the application. Brittleness is defined, for the purpose of this invention, as the distance of penetration until the maximum force is achieved (in milimeter) in the first penetration. For a semi-solid gel as in the present invention (i.e. brittle gels), that is typically observed at a breaking point, at a distance (in milimeters) less than the penetration depth defined (10 mm). This is illustrated in Figure 2a. Contrary to a semi-solid gel, a paste may be too sticky and is not brittle, it does not break. This is illustrated in Figure 2b. An elastic gel might also not break within the penetration depth imposed in the test (10mm). This is illustrated in Figure 2c. The gel of the invention is preferably not an elastic gel.

In the composition of the present invention the brittleness is preferably less than 9 millimeter, more preferably less than 8 millimeter, even more preferably less than 7 millimeter. Recovery: The recovery of the composition is expressed as the ratio A2/A1: The ratio between A2/A1 is considered as a measure for the cohesiveness of the composition, i.e. is a measure of how well the product withstands a second deformation relative to how it behaved under the first deformation. The recovery is preferably less than 80%, more preferably less than 70%, even more preferably less than 60%. In general, semi-solid (brittle) gels as in this invention show a lower recovery value than very elastic gels, liquids, purees and pastes, as they break in the first cycle (i.e. breaking point is observed in the first cycle at a distance below 10 mm).

## Water and water activity

The food composition according to the invention comprises water. Water is preferably present in a total amount of from 35 wt% to 93 wt%. More preferably water is present in an amount of from 40 wt% to 85 wt%, even more preferably from 45 wt% to 80 %wt, most preferably from from 50 wt% to 75 %wt. Water is representing here the total water content of the food composition.

The water activity of the product is preferably of between 0.60 and 0.95, more preferably of between 0.65 and 0.90 even more preferably between 0.70 and 0.90, most preferably between 0.75 and 0.85.

## Comminuted plant material

The concentrate food composition according to the invention comprises comminuted plant material. The term "comminuted plant material" in the composition of the invention preferably refers to material originating from vegetables or fruits. During the preparation of the composition of the invention, coarse plant material is comminuted, for example by shearing or milling. The comminuted plant material normally contains water-insoluble components made of polymers such as cellulose, hemicelluloses and lignin. For example, a vegetable or fruit juice (or serum), although derived from plant material is not considered a comminuted plant material in the context of the present invention. The comminuted plant material in the composition of the invention therefore preferably is plant material selected from the group consisting of plant cells, plant cell fragments, clusters of plant cells and/or plant cell fragments, and mixtures thereof. This comminuted plant material can be visualised for example by light microscopy. The size of the comminuted plant material is suitably in the range of the size of cell fragments to cell clusters. Preferably, the comminuted plant material has a size of between 10 micron and 1500 micron, preferably of between 20 micron and 1200 micron, more preferably, of between 30 micron and 1000 micron, most preferably of between 50 micron and 800 micron. Preferably, at least 80% by weight of the comminuted plant material has a size of between 10 micron and 1500 micron, preferably of between 20 micron and 1200 micron, more preferably of between 30 micron and 1000 micron, most preferably of between 50 micron and 800 micron. The size should be understood as defined by mesh size, so that the comminuted plant material can be sieved using a sieve with a mesh size as indicated for the (preferred) sizes of the comminuted plant material.

The food composition according to the invention preferably comprises the comminuted plant material, preferably selected from the group consisting of plant cells, plant cell fragments, clusters of plant cells and/or plant cell fragments, and mixtures thereof in an amount of from 10 to 91 wt%, more preferably from 20 to 90 wt%, even more preferably from 30 to 89 wt%, even more preferably from 35 to 85 wt%, even more preferably of from 35 wt% to 80 wt%, most preferably from 40 to 70 wt% (wet weight based on the weight of the total concentrate food composition).

The comminuted plant material is preferably selected from the group consisting of onion, carrot, broccoli, courgette, cauliflower, pea, pumpkin, leek, celeriac, shallot, garlic, potato, sweet potato, green beans, tomato and mixtures thereof.

The comminuted plant material is preferably selected from the group consisting of onion, carrot, broccoli, courgette, cauliflower, pea, pumpkin, leek, celeriac, shallot, garlic, potato, sweet potato, , green beans and mixtures thereof. It was observed that tomato material could provide a significant tomato taste and colour to the food concentrate of the invention. Therefore, it may be preferred that the amount of comminuted material derived from tomato is less than 50 wt%, more preferably less than 30 wt%, even more preferably less than 10 wt% or even less than 1 wt%, based on the weight of the food concentrate. The comminuted plant material is preferably selected from the group consisting of onion, carrot, broccoli, courgette, cauliflower, pea, pumpkin, leek, celeriac, shallot, garlic, potato, sweet potato, green beans and mixtures thereof. Particular good results were obtained when the comminuted plant material was selected from the group consisting of members of the *Allium* family, like onion, shallot, leek, garlic and mixtures thereof. In particular onion is preferred and gave good results in the present invention.

Pectin

Pectic substances are complex heteropolymers originating from plant tissue. Pectin consists predominantly of $\alpha$-D galacturonic acid units, but also contains some amount of neutral sugars such as rhamnose, xylose, arabinose, galactose and gulose. For the purpose of this invention "pectin" is expressed as "galacturonic acid" and we define the "pectin content" in a food formulation as the weight percentage of galacturonic acid (GalA) based on the total water content of the composition. The total pectin content can be determined by methods known in the art, such as for example the Saeman hydrolysis method (Englyst and Cummings (Analyst, 109(7), 937-942 (1984), Filisetti-Cozzi and Carpita (Analytical Biochemistry, 197, 157-162 (1991)).

The carboxyl groups at the sixth carbon of each galacturonic acid unit may be esterified by a methyl group or may exist as unesterified free carboxyl group. The percentage of esterified galacturonic acid units relative to the total number of galacturonic acid units in a pectin polymer is called the degree of esterification (DE). The degree of esterification can be determined according to methods known in the art, such as the base titration method (Shultz, 1965) as proposed by the Food Chemical Codex (FCC (1981). 3rd ed., (1981) National Academy of Science, Washington, DC), quantification of methanol released during de-esterification using gas chromatography (GC) (Walter et al. (1983), Journal of Food Science, 48: 1006-10070), colorimetry (Hou et al. (1999), Botanical Bulletin of Academia Sincia, 40:115-119), high performance liquid chromatography (HPLC) (Levigne S., et al. (2002), Food Hydrocolloids 16: 547-550), nuclear magnetic resonance (NMR) (Rosenbohm et al. (2003) Carbohydrate Research, 338: 637-649) and capillary zone electrophoresis (CZE) (Williams et al. (2003), Journal of Agricultural Food and Chemistry, 51: 1777-1781).

The DE resulting from such a determination is usually expressed as an average degree of esterification to account for the differences in DE of the individual polymers in a formulation. The average degree of esterification (DE) is often used to classify pectin according to physical characteristics like the ability to form gels in the presence of divalent cations like calcium. Complex food formulations of the present invention may contain pectin from different sources with a variety of different average DE, potentially leading to a broad and heterogeneous DE distribution which makes the use of an average DE to characterise the pectin in the invention unpractical.

It was found, that in the context of the present invention, i.e. in high-salt food concentrates, it is the pectin with a DE of lower than 55% that contributes to the desired texture of a semi-solid gel. Therefore, for the purpose of this invention, it is defined here as "total active pectin" (TAP), the remaining part of the total pectin content is defined as "total inactive pectin" (TIP). TAP can be defined as being all pectin of the "total pectin content" with a DE below 55%. Preferably the DE is below 50% even more preferably below 45%, most preferably the DE is below 40%. A method to separate pectin into fractions with different DE is described, for example, by , Strom et al. (2005), Carbohydrate Polymers, Volume 60, Issue 4, 20 June 2005, Pages 467-473. The TAP is quantified by the sum of all fractions of the "total pectin content" with a DE below 55%.

According to the invention the amount of total active pectin (TAP) is between 0.3% and 10%, preferably between 0.4 wt% and 5 wt%, more preferably between 0.45 and 4.5 wt% even more preferably between 0.5 wt% and 3.5 wt%, most preferably between 0.6 wt% and 3.0 wt%, expressed as the weight percentage of galacturonic acid (GalA) based on the total water content of the food composition. This is to be calculated as common in the art, i.e. according to the following formula: ((weight of galacturonic acid)/(weight of galacturonic acid + weight of total water content)) x 100 in %. This formula is used, mutatis mutandis for all ingredients in the composition which are calculated on the total water content, such as AFP, NaCl, calcium ions, potassium salt.

Accordingly, the concentrate food composition of the present invention comprises from 0.3 to 10 wt% of pectin based on the total water content of the food composition, pectin being all pectin with a degree of esterification of lower than 55%, wherein the amount of said pectin is measured as the amount of galacturonic acid (GalA), and is calculated as ((weight of GalA)/(weight of GalA + weight of total water content))x100 in %, Preferably, the DE is lower than 50% even more preferably lower than 40%, most preferably the DE is lower than 30%.

For a NaCl content of higher than 20 wt% on total water content, of total active pectin (TAP), with a DE below 55% as defined above, is preferably of between 0.5 wt% and 10 wt%, more preferably of between 0.6 wt% and 5 wt%, even more preferably between 0.7 wt% and 4 wt%, most preferably between 0.7 wt% and 3 wt%, expressed as galacturonic acid content based on the total water content of the food composition.

For a NaCl content of higher than 10 wt% on total water content, of total active pectin (TAP), with a DE below 55% as defined above, is preferably of between 0.3 wt% and 5 wt%, more preferably of between 0.4 wt% and 4 wt%, even more preferably between 0.5 wt% and 3 wt%, most preferably between 0.6 wt% and 2 wt%, expressed as galacturonic acid content based on the total water content of the food composition.

In a composition of the invention, pectin is present both in the form of free pectin and in the form of bound to comminuted plant material. Part of the total pectin content, i.e. TAP and TIP together, is bound to the comminuted plant material, as defined above. The part of the total pectin content bound to comminuted plant material is denoted as "bound pectin". In line with the description given above, active bound pectin (ABP)_is distinguished from inactive bound pectin, based on the degree of esterification of the pectin. The other part of the total pectin content, i.e. which is not bound to the comminuted plant material as described above, may be dissolved in the water of the concentrate food composition and is denoted as "free pectin". In line with the descriptions given above, active free pectin (AFP) is distinguished from inactive free pectin based on the degree of esterification of the pectin.

Without willing to be bound to theory, it is thought that the active pectin bound to comminuted plant material (ABP) is bound to the cell wall (of plant cells, plant cell fragments, clusters of plant cells and/or plant cell fragments, and mixtures thereof), as naturally present in the plant. In the food composition of the invention, the ABP connected to possibly separate pieces of comminuted plant material are thought to be linked via AFP.

According to the invention the amount of active free pectin (AFP) is preferably of from 0.15 wt% to 8 wt%, more preferably of from 0.20 wt% to 5wt%, even more preferably of from 0.25 wt% to 4 wt%, most preferably of from 0.30 to 3 wt% expressed as the weight percentage of galacturonic acid (GalA) based on the total water content of the food composition.

The pectin content in the composition according to the invention can be summarised as follows:

| Total pectin (expressed as galacturonic acid) | Total active pectin (TAP, DE<55%) | Bound to plant material(ABP) |
| --- | --- | --- |
| | | Free, i.e. not bound (AFP) |
| | Total inactive pectin (TIP, DE>55%) | Bound to plant material (IBP) |
| | | Free, i.e. not bound (IFP) |

The ratio of active free pectin to active bound pectin (AFP/ABP) can be calculated according to the formula [(wt% active free pectin)/(wt% active bound pectin]. AFP and ABP are expressed as GalA. According to the invention the ratio of active free pectin to active bound pectin AFP/ABP is between 0.2 and 200, preferably between 0.3 and 100, even more preferably between 0.4 and 40, even more preferably between 0.5 and 20, most preferably between 0.7 and 10.

Hence, the present invention relates to a concentrate food composition wherein part of the pectin is bound to comminuted plant material, and part of the pectin is not bound (free) to comminuted plant material and said free and said bound pectin are present in a ratio of from 0.2 to 200. Preferably the ratio is between 0.3 and 100, even more preferably between 0.4 and 40, even more preferably between 0.5 and 20, most preferably between 0.7 and 10.

Salt

The food composition according to the present invention is a concentrate product that can be used to prepare for example a bouillon, a soup or a seasoned dish. Typically, such a product is diluted, for example in water, or in a dish, for example in a liquid dish or a in sauce or in a vegetable or rice dish, to obtain a food product which is ready for consumption. Inherently, the concentrate food composition according to the invention comprises a high salt content, to allow the conventional relatively high dilution factors, while maintaining a proper taste impact. To this end, the food composition according to the invention preferably comprises of from 5 wt% to 40 wt% of sodium salt and optionally potassium salt (taken together), more preferably of from 7 wt% to 35 wt%, even more preferably of from 10 wt% to 35 wt%, even more preferably of from 12 wt% to 30 wt%, most preferably of from 15 to 27 wt%, based on the total water content of the concentrate food composition. The amount of sodium salt and optionally potassium saltis calculated as standard in the art, and is according to the following formula: ((weight of salt) / (weight of salt + weight of total water content))*100 in %. For example 5 g NaCl in 20 g water result in an amount of NaCl of 20 wt% on water content. When preparing the food concentrate composition of the invention, these amounts of sodium salt and optionally potassium salt can be added during preparation.

Sodium salt, preferably NaCl, is preferably present in an amount of from 5 to 40%, more preferably of from 7 wt% to 35 wt%, even more preferably of from 10 wt% to 35 wt%, even more preferably of from 12 wt% to 30 wt%, most preferably of from 15 to 27 wt%, based on the total water content of the concentrate food composition.

It might be preferred that in addition to sodium salt, preferably NaCl, the food composition comprises a potassium salt (e.g. KCl). The presence of potassium ($K^+$) cations in combination with sodium ($Na^+$) cations, preferably at specific ratios in the composition, allowed for the use of less calcium ($Ca^{2+}$) cations for gelation, or less pectin and stronger gels could be obtained with a higher gel firmness. Reduction of the amount of calcium cations may be preferred because this increases the speed of dispersion of the food composition.

To this end, especially when both sodium salt and potassium salt are present, sodium salt, preferably NaCl, is preferably present in an amount of from 4 to 35 wt%, more preferably of from 4.5 to 30 wt%, even more preferably of from 5 to 25 wt%, most preferably of from 7 to 23 wt%, based on the total water content.

The food composition preferably comprises potassium salt. Most preferably, the potassium salt comprises KCl. To this end, potassium salt, preferably KCl, is preferably present in an amount of from 0.6 to 20 wt%, more preferably of from 0.8 to 19wt%, even more preferably of from 1 to 17 wt%, most preferably of from 1.5 to 15 wt%, based on the total water content of the composition.

It was found that for specific ratios of $Na^+$ and $K^+$, expressed as $[(Na^+/(Na^++K^+))*100 (in\%)]$ (expressed in %), optimal results were obtained. Preferably, the food composition of the present invention comprises $Na^+$ and $K^+$ cations in a ratio of $[(Na^+/(Na^++K^+))*100 (in\%)]$ of from 15 % to 95 %, more preferably from 35 % to 93 %, more preferably of from 40 % to 92 %, even more preferably of from 45 % to 90 %, most preferably from 50% to 85 %.

To this end potassium salt, preferably KCl, is preferably present in an amount to result in an amount of potassium salt (preferably KCl) of from 0.6 to 20 wt%, based on the total water content and a ratio of $[(Na^+/(Na^++K^+))*100 (in\%)]$ of from 15 wt% to 95 wt% in the final concentrate food composition.

Especially in the situation that $K^+$ cations are present in the food composition, the food composition preferably comprises $Na^+$ cations in an amount of from 1.5 wt% to 15 wt%, more preferably in an amount of from 1.7 wt% to 12 wt%, even more preferably in an amount of from 2 wt% to 11 wt%, most preferably from 2.5 to 10% based on the total water content of the concentrate. The amount of $K^+$ cations in the food composition is preferably in an amount of from 0.3 wt% to 13 wt%, more preferably in an amount of from 0.4 wt% to 10 wt%, even more preferably in an amount of from 0.5 wt% to 9 wt%, most preferably from 0.8 to 8 wt%, based on the total water content of the concentrate.

Calcium

The food composition according to the invention comprises calcium salt. Preferably the food composition according to the invention comprises $Ca^{2+}$ cations in an amount of from 0.01 wt% to 3 wt% $Ca^{2+}$, more preferably from 0.02 wt% to 2 wt% $Ca^{2+}$, even more preferably from 0.03 wt% to 1.5 wt%$Ca^{2+}$, most preferably from 0.04 wt% to 1 wt%$Ca^{2+}$ based on the total water content of the food concentrate.

The food composition of the present invention further might also comprise $Mg^{2+}$ in addition to $Ca^{2+}$. Preferably the food composition according to the invention comprises $Mg^{2+}$ in an amount of from 0.01 wt% to 3 wt% $Mg^{2+}$, more preferably from 0.02 wt% to 2 wt% $Mg^{2+}$, even more preferably from 0.03 wt% to 1.5 wt% $Mg^{2+}$, most preferably from 0.04 wt% to 1 wt% $Mg^{2+}$ based on the total water content of the concentrate.

Preferably the food composition according to the invention comprises $Ca^{2+}$ in an amount of from 10 to 2000 mg $Ca^{2+}$/g of pectin, more preferably from 20 to 1000 mg $Ca^{2+}$/g of pectin, even more preferably from 30 to 800 mg $Ca^{2+}$/g of pectin, most preferably between 40 to 300 mg $Ca^{2+}$/g of pectin (pectin as defined above, i.e. pectin being all pectin having a DE of lower than 55%, or less if preferred). It might be preferred that the invention comprises $Ca^{2+}$ in an amount of from 100-300 mg $Ca^{2+}$/g of pectin.

Other ingredients

Savoury taste enhancer

To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate. An individual taste enhancer selected from the group mentioned above may be present in an amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate.

Taste imparting components

In the concentrates according to the invention, it is preferred that taste-imparting components are present. They may comprise one or more of yeast extract; hydrolyzed proteins of vegetables-, soy-, fish, or meat origin; liquid or dissolvable extracts or concentrates selected from the group consisting of meat, fish, crustaceans, plant material (e.g. herbs, fruit, vegetable) and mixtures thereof, particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl). Preferably the plant pieces comprise pieces selected from the group consisting of onion, garlic, leek, carrot, parsley, tomato and mixtures thereof. Preferably the amount of taste-imparting components as set out above is from 1 wt% to 60 wt% (by weight on the total concentrate). More preferred from 2 wt% to 50 wt%, even more preferably from 5 wt% to 40 w%.

Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 60 wt%, more preferably from 1 wt% to 50 wt%, even more preferably from 2 wt% to 40 wt% (by weight on the total concentrate). The amount of particles can be of from 0.5 to 30 wt%, more preferably of from 1 to 20 wt%, even more preferably of from 2 to 10 wt% (wet weight based on the weight of the food composition). Preferably, the size (measured as mesh size by sieve analysis) of the particles is larger than 0.5 millimetre (500 micron), more preferably larger than 1 millimetres (1000 micron), preferably larger than 1.5 mm (1500 micron), preferably larger than 2 mm (2000 micron). Preferably, the size is smaller than 2 cm, more preferably smaller than 1 cm. Preferred ranges of the size of the particulates can be from more than 0.5 mm and less than 2 cm, preferably of from more than 1 mm and less than 1 cm, even more preferably of from 1.5 mm to 1 cm.

Fat

Fat may be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 15 wt% of fat, preferably less than 10 wt% of fat. In another preferred aspect, fat may be present in an amount of from 0.5 to 15 wt% of fat, more preferably of from 1 to 10 wt% of fat, most preferably of from 3 to 10 wt% of fat, based on the weight of the food concentrate. The amount of fat in the food concentrate is preferably as low as possible, for optimal stability. It may be preferred that fat is absent.

The concentrate food composition of the invention is a savoury food composition. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15 wt%, most preferably lower and 10 wt%. It can be more than 1 wt%, preferably more than 5 wt% based on the total weight of the concentrate. A suitable range could be of between 1 and 20 wt%, preferably of from 3 to 15 wt% based on the total weight of the concentrate. It may be preferred that the composition is free from sugar or free from any added sugar. Sugar polyols could also provide a sweet taste to the product resulting after dilution. The consumer may not appreciate the presence of these compounds. The concentration of sugar polyols, for example liquid sugar polyols, is preferably less than 1 wt%, more preferably less than 0.5 wt%, even more preferably less than 0.1 wt%, or less than 0.05 wt% based on the weight of the food concentrate. Most preferably the composition does not contain any added sugar polyol or added liquid sugar polyol.

The pH (measured at room temperature, e.g. 20 °C) of the concentrate food composition of the invention is preferably higher than 3.5, preferably between 3.5 and than 7, more preferably higher than 3.8, more preferably between 3.8 and 6, even more preferably higher than 4.0, even more preferably between 4.0 and 5.5. These levels provide a good texture of the gel and optimal taste in the product resulting after dispersing in water or a dish.

Packaging/size:

The food composition according to the invention is preferably packaged. It is preferably packaged in a tub, wherein the tub preferably comprises one food composition.

The weight of the food composition is preferably of between10 gram to 500 grams, more preferably of between 15 grams and 300 grams. It may be preferred that the weight of the food composition is between 10 and 200 grams, more preferably of between 15 and 100 grams. This format is in particular useful for unit dosing for family portions. It may be preferred that the food composition has a weight of between 50 grams and 500 grams, preferably of between 100 grams and 350 grams. This packaging may be suitable for restaurant applications.

Process

The present invention further relates to a process to produce a food composition of the invention. The process comprises the steps of:

a) Providing comminuted plant material which has been heated,
b) Adding pectin methylesterase to the comminuted plant material and allowing to_incubate,
c) Inactivating the pectin methylesterase after step b),

d) Adding sodium salt and optionally potassium salt,,
e) Adding calcium salt,
f) Packaging and allowing to solidify,

wherein the process further comprises at least one of the following steps:

- adjusting the pH of the comminuted plant material to a pH of between 1 and 3, wherein this step is carried out before inactivation step c),
- adding pectin with a degree of esterification of below 55% and which is not bound to comminuted plant material,
- adding pectin with a degree of esterification of above 55% and which is not bound to comminuted plant material, wherein this step is carried out before step b).

to obtain a concentrate food composition in the form of a gel.

Step a) Providing comminuted plant material which has been heated

The process comprises a first step wherein comminuted plant material is provided. The plant material is preferably selected from the group of plants onion, carrot, broccoli, courgette, cauliflower, pea, pumpkin, leek, celeriac, shallot, garlic, potato, sweet potato, green beans, tomato and mixtures thereof. The plant material is preferably selected from the group of plants onion, carrot, broccoli, courgette, cauliflower, pea, pumpkin, leek, celeriac, shallot, garlic, potato, sweet potato, green beans, and mixtures thereof. Particular good results were obtained when the plant material was selected from the group consisting of members of the *Allium* family, like garlic, onion, shallot, leek and mixtures thereof, in particular onion. Before comminuting, the plant material is suitably cut in pieces that allow easy processing. Therefore, step a) may further comprise cutting and/or peeling of plant material. It might be preferred that the plant material is fresh and preferably is not frozen plant material or defrosted plant material, i.e. which has been frozen before. The use of frozen of defrosted material resulted in less optimal results.
Comminuting is preferably carried out after heating of plant material but can be carried out during or even before heating if preferred. Comminuting preferably comprises cutting, milling, or shearing of the material. Comminution of the material is carried out to obtain a small size of the comminuted plant material, preferably in the range of that of cellular fragments, individual cells or clusters thereof. Preferably, more than 80 wt% of the comminuted plant material is plant material selected from the group consisting of of plant cells, plant cell fragments, clusters of plant cells and/or plant cell fragments, and mixtures thereof. Preferably, at least 80% by weight of the comminuted plant material has a size of between 10 micron and 1500 micron, preferably of between 20 micron and 1200 micron, more preferably of between 30 micron and 1000 micron, most preferably of between 50 micron and 800 micron. The comminuted plant material is also heated, before or after comminuting, preferably before.
Heating deactivates enzyme activity inside the plant material, e.g. pectinase activity, and may soften the texture of the plant material. Heating is preferably carried out at a temperature of higher than 50°C. Preferably heating is carried out at a temperature of higher then 70°C more preferably of higher than 80°C, even more preferably higher than 85°C. The temperature is preferably below 150°C, more preferably below 120°C, even more preferably below 100°C, most preferably below 95°C.Heating may be carried out at a temperature of between 50°C and 150°C, preferably of between 70°C and 120°C, more preferably of between 80°C and 95°C. It is in the skill of the artisan to adjust the temperature and time setting to achieve the enzyme deactivation and material softening. Heating can suitably be carried out in a batch process or continuous process, for example by using heat exchangers or other processes known in the art.

Step b) PME addition and incubation

Step b) comprises adding pectin methylesterase (PME) to the comminuted plant material and allowing to_incubate. PME is preferably added after providing the comminuted plant material in step a). It might also be preferred that PME is added after addition of NaCl (step d), or after addition of calcium salt (step e). PME provides a de-esterification of the methyl groups at the pectin molecule. The PME preferably comprises PME selected from the group consisting of fungal PME, vegetable PME and mixtures thereof. The added PME enzyme preferably comprises fungal PME. The added PME enzyme preferably is fungal PME. The PME enzyme is preferably a purified PME enzyme, most preferably a purified fungal PME enzyme. Purified should be construed here as not being already present in the vegetable material of step a), but added to the mixture during preparation of the composition of the present invention.
The activity of the PME enzyme can be determined as known in the art for example by titration of the carboxylic acid groups, which have been released from pectin substrate in time with a sodium hydroxide solution, using a pH-Stat set up. The determination is carried out at pH 4.50 and a temperature of 30 °C. The substrate consists of methylated pectin, water and salt. The activity is expressed in Pectin Esterase Units (PEU). One unit (PEU) is defined as the amount of enzyme that hydrolyses 1 milimole of carboxy methylester per minute from pectin at pH 4.50 and 30°C. The amount of pectin methyl esterase that is added is preferably of between 0.1 and 9000 pectin estearase units (PEU), more preferably of between 0.2 and1000 PEU, even more preferably of between 0.2 and 300 PEU, even more preferably of between 0.3 and 200 PEU most preferably between 0.3 and 100 PEU per kg of comminuted plant material. As is clear for the skilled person, the required incubation time may depend on factors like the amount of enzyme that is used, the amount of comminuted plant material, the type of enzyme and the incubation temperature, e.g. by using the information from the enzyme supplier regarding a selected PME enzyme, it is within the skill of the artisan to determine the incubation time needed. The reaction can be followed for example by checking the pH decrease during incubation time and allow incubation e.g. till a plateau phase is reached.

During step b), if deemed necessary or preferred, for example in view of an acidification step which includes adjusting the pH of the comminuted plant material to a pH of between 1 and 3 as described below, the pH and temperature are readjusted before the addition of the pectin methyl esterase (PME) enzyme, for optimal performance of the PME enzymes. The optimal pH and temperature to achieve best enzyme performance can be easily found by a person skilled in the art, and depends on the source of the enzyme that is used, e.g. fungal, or vegetable and is generally defined and provided by the ingredient supplier. For example, for fungal PME enzyme, the pH can be adjusted to a pH of between 3.5 and 7, preferably of between 3.5 and 5. The pH adjustment can be achieved by using a suitable food grade acid or base such as hydrochloric, acetic acid, citric acid, phosphoric acid, sodium hydroxide, sodium carbonate etc. Preferably, also the temperature is adjusted to the optimal temperature for the PME enzyme performance. For example, for fungal PME enzyme, the temperature is preferably between 10°C and 50°C. Optimal temperatures are obtained from supplier information or can be determined by a person skilled in the art.
Therefore, step b) may further comprise the step of adjusting the temperature and/or the pH to allow optimal PME activity.

Step c) PME inactivation

After the enzyme incubation in step b), the PME enzyme is inactivated in inactivation step c). The inactivation preferably comprises heating. Therefore, preferably the inactivation step comprises heating of the material resulting from step b) to a temperature of higher than 60°C. Preferably heating is carried out to a temperature of higher then 70°C more preferably of higher than 75°C, even more preferably higher than 80°C. The temperature is preferably below 150°C, more preferably below 120°C, even more preferably below 100°C, most preferably below 95°C. The heating step deactivates the PME enzyme. The heating step for the PME inactivation is preferred although not the only possibility for inactivation. Alternatively, the PME inactivation can be achieved by other methods, for example, by combining heating to lower temperatures (e.g. 20-75°C) with high pressure (e.g. 100-900 MPa). Other available methods for PME inactivation are, for example, inactivation by pulsed electric fields or by the use of enzyme inhibitors

Step d) addition of salt(s)

The process further comprises a step d) of adding sodium salt. sodium salt is preferably added to the comminuted plant material after step a), more preferably after step b), most preferably during or after step c). Sodium salt, preferably NaCl, is preferably added in an amount of from 4 wt% to 40 wt%, more preferably of from 7 wt% to 40 wt%, even more preferably of from 10 wt% to 35 wt%, more preferably of from 12 wt% to 30 wt%, most preferably of from 15 to 27 wt%, based on the total water content of the resulting food composition. In case a potassium salt, like KCl is used, it is preferably added at the moments as preferred for sodium salt. The potassium salt, preferably KCl, is preferably added in an amount to result in an amount of from 0.9 to 15 wt%, more preferably of from 1 to 10 wt%, even more preferably of from 1.2 to 8 wt%, most preferably of from 1.5 to 5 wt%, based on the total water content of the final concentrate food composition. Preferably, the potassium salt, preferably KCl, is added in an amount to achieve a ratio of $[(Na^+/(Na^++K^+))*100$ (in%)] of from 15% to 95%, more preferably from 35 % to 93 %, even more preferably of from 40% to 92%, even more preferably of from 45% to 90%, most preferably from 50% to 85% in the final resulting concentrate food composition of the invention. The preferred amounts and ratios can be combined and preferably potassium salt, preferably KCl, is added in an amount to result in an amount of from 0.6 to 20 wt% KCl and a ratio of $[(Na^+/(Na^++K^+))*100$ (expressed in%)] of from 15 % to 95 % in the final concentrate food composition,
[0066] The mixture including the salt is brought into solution. It can be preferred to heat the solution, for example to speed up the dilution rate. Therefore, preferably step d) comprises heating after addition of the salt (e.g. sodium salt, potassium salt and/or calcium salt). It is noted that the salt can be present in an amount which is higher than the saturation point of the salt. In this case, salt crystals may appear e.g. at the surface of the resulting concentrate.

Step e) addition of calcium salt

The process further comprises the step e) of adding of calcium salt. In addition $Mg^{2+}$ cations can be added to the mixture in the form of a magnesium salt. Step e) can preferably be carried out after incubation with PME (i.e. after step b), more preferably after inactivation of PME (i.e. after step c), most preferably during or after addition of sodium salt (i.e. during or after step d). It could for example be added after during step f), i.e. when the mixture is transferred to a packaging. Preferably calcium salt is added to the comminuted plant material to a total concentration of $Ca^{2+}$ cations in the resulting concentrate food composition according to the invention of from 0.01 wt% to 3 wt% $Ca^{2+}$, more preferably from 0.02 wt% to 2 wt% $Ca^{2+}$, even more preferably from 0.03 wt% to 1.5 wt% $Ca^{2+}$, most preferably from 0.04 wt% to 1 wt% $Ca^{2+}$, based on the total water content of the concentrate.

Calcium cations can be added by addition of a calcium salt, for example $CaCl_2$ or $CaSO_4$.

Addition of other ingredients

The process may further comprise the step of addition of taste imparting components and/or savoury taste enhancer. This step may comprise adding vegetable pieces, fruit pieces, herb pieces, meat pieces, fungi pieces and mixtures thereof. Taste imparting components, savoury taste enhancers and fat can be added in the amounts as described above under "other ingredients". As indicated above, preferred ranges of the size of the particulates can be of from more than 0.5 mm and less than 2 cm, preferably of from more than 1 mm and less than 1 cm, even more preferably of from 1.5 mm to 1 cm. For example, the taste imparting components may be added in an amount of from 1 to 60 wt%, based on the weight of the total resulting food composition. The savoury taste enhancer may be added in an amount of from 0.1 to 30 wt%, based on the weight of the total resulting food composition.

Fat may be added in an amount of below 15 wt%, more preferably below 10 wt%, based on the weight of the resulting concentrate food composition.

The step of addition of taste providing ingredients is preferably carried out after step b), more preferably after step c) even more preferably during or after step d).

Step f) packaging and solidification

In step f) the mixture resulting from step e) is packaged and allowed to solidify. After step e) the product may be in liquid form and is transferred to a packaging, such as a tub. Solidification preferably takes place in the packaging. Solidification preferably comprises cooling. Solidification is preferably carried out at a temperature of between 3 and 40°C.

In addition to the steps described above, at least one of the three additional steps as described below is carried out to obtain a food concentrate in the form of a gel according to the invention:

Acidification:

It may be preferred that the process according to the invention further comprises the step of adjusting the pH of the comminuted plant material to a pH of between 1 and 3. This acidification step may be done during or after step a), but is preferably carried out after step a). It is carried out before inactivation step c) and preferably carried out before step b). It is preferred that this reduced pH is maintained for a period of less than 2h, more preferably of less than 1h, even more preferably of less than 30 min. It is preferred that this reduced pH is maintained for a period of between 1 minute and 1hour, more preferably of between 5 minutes and 30 minutes.

This step resulted in increased gel strength in the concentrate food composition according to the invention, resulting at the end of the process and no additional gelling agent needs to be added like starch or gums (e.g. pectin).

The pH reduction can be achieved, as known in the art, by using a suitable food grade acid such as for example hydrochloric acid, citric acid, phosphoric acid or mixtures thereof. During the step of adjusting the pH of the comminuted plant material to a pH of between 1 and 3 the temperature is preferably kept between 30°C and 90°C, more preferably between 40°C and 80°C, most preferably between 50°C and 75°C. As indicated above, when this acidification step is preferred, it maybe preferred to adjust, after the acidification step, the pH to the pH as optimal for PME enzyme which is used in step b).

Accordingly the invention relates to a process comprising the steps of:

    a) Providing comminuted plant material which has been heated,
    b) Adding pectin methylesterase to the comminuted plant material and allowing to_incubate,
    c) Inactivating the pectin methylesterase after step b),
    d) Adding sodium salt and optionally potassium salt,
    e) Adding calcium salt,
    f) Packaging and allowing to solidify,

wherein the process further comprises the step of:

- adjusting the pH of the comminuted plant material to a pH of between 1 and 3, wherein this step is carried out before inactivation step c),

to obtain a concentrate food composition in the form of a gel.

Addition of free active pectin

It might be preferred, that the process of the invention further comprises the step of adding pectin with a degree of esterification of below 55% and which is not bound to plant material, e.g. not bound to comminuted plant material, herein defined as active free pectin (AFP). This step is carried out preferably before addition of the sodium salt (i.e. before step d) and more preferably before the addition of PME (i.e. before step b). This step can be preferred in addition to the acidification step as described above or for example instead of this acidification step. This step may for example be preferred in case frozen or defrosted plant material is used to prepare comminuted plant material. Accordingly, a process may be preferred comprising the steps of:

a) Providing comminuted plant material which has been heated,
b) Adding pectin methylesterase to the comminuted plant material and allowing to_incubate,
c) Inactivating the pectin methylesterase after step b),
d) Adding sodium salt and optionally potassium salt,,
e) Adding calcium salt,
f) Packaging and allowing to solidify,

wherein the process further comprises the step of:

- adding pectin with a degree of esterification of below 55% and which is not bound to comminuted plant material,

to obtain a concentrate food composition in the form of a gel.

Addition of free inactive pectin

The process of the invention may comprise the step of adding free, inactive pectin (not bound to plant material, e.g. not bound to comminuted plant material). This free inactive pectin is added before the addition of PME in step b). This step can be preferred in addition to the acidification step as described above, or in addition to the step of adding additional free active pectin, as described above, or instead of these steps. This step may for example be preferred in case frozen or defrosted plant material is used to prepare comminuted plant material. Preferably, the invention relates to a process comprising the step of adding pectin with a degree of esterification of above 55% and which is not bound to comminuted plant material. Accordingly, a process might be preferred comprising the steps of:

a) Providing comminuted plant material which has been heated,
b) Adding pectin methylesterase to the comminuted plant material and allowing to_incubate,
c) Inactivating the pectin methylesterase after step b),
d) Adding sodium salt and optionally potassium salt,
e) Adding calcium salt,
f) Packaging and allowing to solidify,

wherein the process further comprises the step of:

- adding pectin with a degree of esterification of above 55% and which is not bound to plant material,

to obtain a food concentrate in the form of a gel.

The invention further relates to a concentrate food composition obtainable by the process of the present invention. The concentrate food composition of the present invention is preferably a bouillon concentrate, a soup concentrate, a sauce concentrate a gravy concentrate or a seasoning concentrate.

Use

In a further aspect, the present invention relates to the use of the concentrate food composition according to the invention to prepare a bouillon, a soup, sauce, gravy or a seasoned dish. The use according to the present invention preferably comprises diluting the concentrate food composition according to the invention, at least part of it, in an aqueous liquid, or mixing it into a dish. The aqueous liquid is preferably water, but can be a sauce, a soup, milk etc. The dish can be a vegetable dish, meat, fowl, fish etc. The temperature of the aqueous solution or dish is preferably of between 60°C and 100°C, more preferably of between 70°C and 95°C. The food composition according to the invention disperses relatively fast in hot water (e.g. 95°C). It may be preferred that 25 gram (more or less cube-shaped) disperses in 1L of hot water within 3 minutes, preferably within 2 minutes.

In the context of the present invention we understand as dispersing the process of breaking a gel into smaller parts of a given size and distributing said particles through an aqueous liquid or dish.

To quantify the dispersing properties a Dispersion Test can be used where the mass decrease of a semi-solid gel over time is measured. This mass decrease is caused by breaking apart of said large semi-solid gel into smaller particles. The food composition according to the invention disperses relatively fast in hot water (e.g. 95°C). It may be preferred that 25 gram of a cube-shaped gel disperses in 1L of hot water within 3 minutes, preferably within 2 minutes.

During dispersion, (partly) dissolving of gel particles may take place as well. The change in conductivity and mass decrease to analyse relative dissolving and dispersion can be measured according to the following methods:

Dispersion test:

Equipment:

- A kitchen food preparation machine (Kenwood Cooking chef major KM070 series), with temperature control (one stirring speed for temperatures above 60°C).
- Flexi beater stirrer attachment
- Sieve: 1 mm mesh
- Balance (at least $\pm 0.1$g precision)

Procedure:

- 1L of water is added to the Kenwood chef bowl
- The temperature of the machine is set to 95-97°C.
- The gel product to be analysed is weighed (25-30g gel composition (weight$_{t=0}$ in g) )
- When a temperature of 95-97°C is reached, mixing is stopped. The gel sample is inserted into the food preparation machine, and timer and stirrer are started. After a set period (see below), the product is sieved (water + gel food composition) through a 1 mm mesh sieve.
- The amount of product left in the sieve is weighed.
- Measurements are taken after a period of dispersion of, for example, 15s, 30s, 1min, 2min, 4min, 8min at least in duplicates.
- To determine the weight of any particles present in the gel product, as a reference a dispersion time is chosen which is sufficiently long enough to essentially disperse the entire gel product. The weight of the material which is left in the sieve is not of gel particles but of other particles which were present in the original gel product, such as vegetable particles, meat pieces etc. In the case of the present Examples, a dispersion time of 10 min was sufficient to disperse the entire gel product and determine the weight of the remaining particles.

Calculation:

- The % of gel food composition not dispersed at the set times (e.g. 15s, 30s, 1min, 2min, 4min, 8min) is calculated as follows:

$$[\%gel\ not\ dispersed:\ (weight_{t=ti} - weight_{t=10\ min})\ /\ (weight_{t=0} - weight_{t=10\ min})\ *100]$$

Wherein:

- weight$_{t=10\ min}$ is the weight of product (particles) left in the sieve after 10 min, i.e. when the entire gel product has

been dispersed).
- $weight_{t=ti}$ is the weight of product left in the sieve at the set times of, for example, 15s, 30s, 1min, 2min, 4min, 8min
- $weight_{t=0}$ is the initial weight of the product
- $(weight_{t=0} - weight_{t=10\ min})$ = "gel weight", i.e. product weight without particles larger than 1 mm mesh which are not gel particles(retained by sieve)

For example:

- Initial product (gel food composition) weight=25g=> $weight_{t=0}$
- Weight product left after 30s= 5 g (including undispersed gel and particles larger than 1 mm mesh size) => $weight_{t=30}$,
- Weight product left after 10 min: 3 g (control: particles larger than the mesh size, gel is assumed completely dispersed after 10 min for comparative purpose) => $weight_{t=10}$ min.

```
[%gel not dispersed: (5-3)/(25-3)*100=9%]
```

Test: Increase in viscosity upon cooling

It was found that after diluting a product of the present invention, and cooling down the dispersion, no undesired increase in viscosity was observed. The viscosity could be measured as known in the art, using a Rheometer:

- Samples are dispersed (e.g. 10x dilution) at a temperature of 99°C, while stirring for 3-6 min, until complete dispersion.

- The solutions are transferred into a rheometer (for example, MCR300 or MCR 301 Physica, Anton Paar) preheated at 90-85°C and equipped with a profiled cylinder and bob.

- The shear rate is set to 30/s throughout the experiment.

- The temperature is kept at 75°C for 2 minutes, the solution is cooled to 20°C at 2°C/min and kept for 2 minutes at 20°C.

- Then the viscosities are read at for example 60°C, 40°C and 20°C and are expressed in mPa.s.

Advantages

A high salt savoury food concentrate could be obtained in the form of semi-solid gel. The concentrate food composition could be prepared starting from fresh plant material, without the need for additional gelling agents, providing a perception of naturalness. The concentrate food composition did not show any significant undesirable increase in viscosity after dilution in water and subsequent cooling down. The appearance in the application (i.e. in use) therefore was strongly improved compared to conventional concentrate food compositions. The concentrate food composition according to the invention showed an easy and natural spoonability, for example when compared to the concentrate food compositions currently available, wherein for example xanthan and locust bean or xanthan and iota-carrageenan is used as a gelling agent. When used, it dispersed with an acceptable speed, comparable with or even faster than a product on the market based on for example, xanthan gum and locust bean gum or xanthan and iota-carrageenan. Upon storage, hardly any syneresis or phase separation of the gel was observed, rendering the product suitable for transport and storage.

The present invention will now be exemplified by the following, non-limiting examples:

**EXAMPLES**

**Example 1:**

A concentrate food composition was prepared according to the invention.

Preparation:

a) Products according to the invention:

1. Onions were peeled and cut in pieces of about 3 cm.
2. The cut onions were heated by using a microwave oven to reach a temperature of above 95°C.
3. The resulting heated onions were comminuted by using a kitchen blender
4. An acidification step was carried out by lowering of the pH to 1.6 with 6M HCl. The pH was kept at 1.6 for 10 minutes at a temperature of 65 to75°C, and was then adjusted to pH 4.1 using 6M NaOH.
5. Fungal PME (PME Novoshape, Novozymes, Denmark) was added by mixing it into the comminuted onion and was allowed to incubate for 30 min at 50°C.
6. NaCl was added and mixed into the comminuted onion (amounts as in tables 1b and 1c)
7. The PME was inactivated by a heating step to above 80°C using a microwave oven
8. $CaCl_2.2H_2O$ was added and mixed in
9. The resulting product was hot-filled in jars and stored at 5°C until a gel had formed.
10. The product was a gel at room temperature

The resulting product was removed from the packaging and checked for shape stability by eye. The firmness, brittleness, and recovery of the gels were measured according to the method as described in the description.

The product according to the invention was compared with a product produced by a different production process (Comparative example 1b and 1d), wherein a heated and a non-heated fraction of comminuted vegetable are combined. This production process did not result in a semi-solid gel.

b) Preparation of a concentrate product using a different production process.

-Preparation of heated fraction of comminuted vegetable (puree 1) :

1.Onions were peeled and cut to pieces of about 3 cm.
2.The cut onions were heated using a microwave oven to reach a temperature of above 95°C.
3.The resulting heated onions were comminuted using a kitchen blender to obtain a puree.

-Preparation of non-heated fraction of comminuted vegetable (puree 2):

1.Onions were peeled and cut to pieces of about 3 cm.
2.The cut onions were heated using a microwave oven to reach a temperature of max 40°C
3.The onions were comminuted in a kitchen blender to obtain a puree.

-Preparation of the mixture

- The two purees were mixed at a weight ratio of 40/60 (puree1: puree 2).
- 1% NaCl was added and mixed in
- The pH was adjusted to 7.5 using 6M NaOH.
- The puree was kept for 1 hour at 55°C.
- The residual NaCl was added followed by the addition of $CaCl_2*2H_2O$ (at temperature >70°C) in amounts as in tables 1b and 1d)
- The end product was hot-filled in jars and stored at 5°C until analysis.
- No gel was formed.

Characterisation of products according to Example1

Analysis of firmness, brittleness and recovery were conducted according to the method described in the description.

Table 1a,b (10% NaCl on total product weight)

| | (% wt) | Example 1a (%) | Comparative example 1b (%) |
|---|---|---|---|
| | Comminuted Onion (%) | 89.3% | 89.4% |
| | CaCl2.2H2O (%) | 0.7% | 0.7% |
| | NaCl (%) | 9.9% | 9.9% |
| | | | |
| | PME (Novoshape, Novozymes, Denmark) * | 0.1% | Not added |
| Aw | | 0.91 | 0.88 |
| Shape stable | | Yes | NO |
| Firmness (g) | | 153±5 | 38±7 |
| Brittleness (mm) | | 3.2+0.2 | 9.9+0.1 |
| Recovery (%) | | 45±0 | 124±10 |
| *PME (Novoshape, Novozymes, Denmark) : 10 PEU/ ml, PEU activity expressed as defined in this patent | | | |

Table 1c,d (20% NaCl on total product weight)

| | (% wt) | Example 1c | Comparative example 1d |
|---|---|---|---|
| | Comminuted Onion (%) | 79.5 | 79.6 |
| | CaCl2.2H2O (%) | 0.6 | 0.6 |
| | NaCl (%) | 19.9 | 19.9 |
| | PME (Novoshape, Novozymes, Denmark) * | 0.1% | Not added |
| Aw | | 0.78 | 0.78 |
| Shape stable | | Yes | NO |
| Firmness (g) | | 113±3 | 29±1 |
| Brittleness (mm) | | 3.0±0.1 | 9.8±0.0 |
| Recovery (%) | | 47±2 | 105±8 |
| *PME (Novoshape, Novozymes, Denmark): 10 PEU/ ml (density=1.185 g/ml), PEU activity expressed as defined in this patent | | | |

Results

Using the process of the invention shape stable gels were obtained comprising high-salt levels. The gels showed a good firmness. The gels were sufficiently brittle, and allowed nice clean spooning of the product from the packaging, there was a clear cut of the scooped piece and the product was not sticky or pasty. The brittleness and recovery parameters were in the range as expected for a brittle gel. After dispersion of the gel in hot water (10x dilution) and subsequent cooling to room temperature no undesired increase in viscosity was observed (see example 7).

A product prepared according to the preparation process b) (comparative example) did not result in a semi-solid gel at the high-salt levels of a concentrate food composition (comparative examples 1b and 1d). The product (comparative examples 1b and 1d) was not shape stable, it was a thick paste, and did not show sufficient gel behaviour and "brittleness" to provide easy spoonabilty. The brittleness and recovery data for the comparative examples 1b and 1d confirmed the visual observation that the texture was not a semi-solid gel, but a paste.

**Example 2) gel preparation with and without PME treatment**

A gel was prepared according to the invention. In addition a comparative example was prepared, without a PME treatment.

1.1 kg of fresh onions was processed according to steps 1 to 4 as in Example 1a (comminuted and acidified) and this was split in 3 portions of 250g

a. To 250 g of the comminuted onion puree 0.3g of PME (Novoshape, Novozymes, Denmark) was stirred in and kept at 50°C for 60 min (sample 2a)
b. To 250g comminuted onion puree 0.015 g of PME (Novoshape, Novozymes, Denmark) was stirred in and kept at 50°C for 60min (sample 2b).
c. To 250 g comminuted onion puree no PME was added (comparative sample 2c)

2. To all portions (a-c) of comminuted onion puree (2a-2c) 15 wt% (on total product weight) of NaCl was added, respectively.
3. The portions were heated in a microwave oven to achieve a temperature of above 80°C to inactivate the added PME enzyme,
4. Immediately thereafter 0.7 wt% (on total product weight) $CaCl_2.2H_2O$ was added and mixed in.
5. The end products were hot filled in jars and stored at 5°C until analysis.

Analysis of firmness, brittleness and recovery were conducted according to the method described in the description.

Result

| | (% wt) | Example 2a | Example 2b | Comp. Ex. 2c |
|---|---|---|---|---|
| | Comminuted Onion (%) | 84% | 84% | 84% |
| | CaCl2.2H2O (%) | 0.7% | 0.7% | 0.7% |
| | NaCl (%) | 15% | 15% | 15% |
| | PME (Novoshape, Novozymes, Denmark) * | 0.1% | 0.005% | Not added |
| Shape stable | | Yes | Yes | No (Paste) |
| Firmness (g) | | 106±19 | 111±4 | 9±1 |
| Brittleness (mm) | | 3.7±0.9 | 3.8±0.7 | 9.5±0.3 |
| Recovery (%) | | 54±3 | 49±2 | 83±9 |
| *PME (Novoshape, Novozymes, Denmark): 10 PEU/ ml (density=1.185 g/ml), PEU activity expressed as defined in this patent | | | | |

The product treated with PME formed a shape stable gel (2a and 2b). The product incubated without added PME (2c) did not form a shape stable gel, but a weak paste. The firmness was up to 12x higher for the products with PME treatment at 15% wt NaCl compared to the product which was not PME treated (sample 2a and 2b, both PME treated compared with sample 2c in which no PME treatment was not done).

The products from example 2a and 2b were easy to spoon out and did not show undesired increase in viscosity upon cooling after dilution.

**Example 3:**

1. Onions were peeled, cut in pieces of about 3 cm and immediately thereafter stored in air tight container at -20°C until frozen (2 days).

Onion jelly preparation:

1. Frozen onions were heated in a microwave oven until a temperature was reached above 95°C.
2. Steps 3 to 4 as in Example 1a (this invention) were followed
3. The resulting comminuted onion was split into two portions: in one portion PME enzyme was not added and to the other 1ml PME/kg of comminuted onion (Novoshape, Novozymes, Denmark) was added and kept incubating at 50°C for 30min.
4. Pectin powder (Grindsted LC 810 from Danisco) and NaCl were added together with the Savoury mix to both comminuted onion purees in the amount as described as in table 3.
5. The mixture was heated in a microwave oven to a temperature was reached of above 80°C
6. Immediately thereafter $CaCl_2.2H_2O$ was added and mixed in
7. The end product was hot filled in jars and stored at 5°C.

Analysis of firmness, brittleness and recovery were conducted according to the method described in the description.

| Table3 | Example 3A With PME treatment % | Comp. Example 3B No PME treatment % |
|---|---|---|
| Comminuted onion Pectin powder | 65.0 | 65.0 |
| Grindsted LC 810 from Danisco [a] | 0.5 | 0.5 |
| Savoury Mix[b] | 22.3 | 22.3 |
| NaCl | 11.5 | 11.5 |
| CaCl2.2H2O PME (Novoshape, Novozymes, Denmark) * | 0.7 0.07 | 0.7 not added |
| Total | 100 | 100 |
| Product characterization | | |
| Aw pH | 0.74 4.3 | 0.75 4.5 |
| Gel characterization | | |
| Shape stable Firmness (g) Brittleness (mm) Recovery (%) | Yes 47±4 1.9±0.3 49±1 | No: Paste 9±0 9.4±0.4 90±7 |
| [a] Used as received: LC 810 (Danisco, average DE typically 37), contains 62% galacturonic acid (GalA). [b] (Savoury mix contains sugar, yeast extract, meat powder base, parsley, pepper, flavours. Also contains 7.6% $Na^+$, 3.1% $K^+$ and 0.1% $Ca^{2+}$. *PME (Novoshape, Novozymes, Denmark): 10 PEU/ml (density=1.185 g/ml), PEU activity expressed as defined in this patent | | |

Result

Example 3 shows that in this example a PME treatment is necessary to obtain a semi-solid gel texture. In comparative example 3b no PME treatment was conducted. Despite addition of additional pectin powder (free active pectin, DE<55%) no gel was formed at this high-salt level. This indicates that bound pectin, as activated by PME, is necessary to provide the desired semi-solid gel texture.

**Example 4) Carrot gels**

A shape stable gel was prepared using carrots as starting material.

Carrot gel preparation

1. Carrots were scratched from outside (peeled) and cut in small pieces (1-3 cm slices).
2. Cut carrots were heated in a microwave oven to a temperature of above 95°C for 20 min.
3. 20 wt% (based on weight carrot) of water was added and the carrots were comminuted to a puree in a kitchen blender.
4. An acidification step was carried out by lowering of the pH to 1.6 with 6M HCl. The pH was kept at 1.6 for 10 minutes at a temperature of 65 to 75°C, and was then adjusted to pH 4.1 using 6M NaOH.
5. Fungal PME (PME Novoshape, Novozymes, Denmark) was added by mixing it into the comminuted carrot puree and was allowed to incubate for 30 min at 50°C.
6. NaCl was added and mixed
7. The puree was heated in a microwave oven until a temperature was reached above 80°C. The water added in step 3 was evaporated in this step.
8. Immediately thereafter $CaCl_2.2H_2O$ was added and mixed
9. The end product was hot filled in jars and stored at 5°C and allowed to form a gel.
10. Firmness, brittleness and recovery were analysed using the method described in the description, and results are indicated in the table below.

| Table 4 | | %wt |
|---|---|---|
| Comminuted carrot | | 85.8 |
| NaCl | | 13.3 |
| CaCl2.2H2O | | 0.7 |
| PME (Novoshape, Novozymes,Denmark)* | | 0.1 |
| Total | | |
| Product characterization | | |
| Aw | | 0.83 |
| pH | | 3.6 |
| | | |
| Gel characterization | | |
| Shape stable | (visual inspection) | yes |
| Firmness (g) | | 83±1 |
| Brittleness (mm) | | 5±1 |
| Recovery (%) | | 63±1 |
| *PME (Novoshape, Novozymes, Denmark): 10 PEU/ ml (density=1.185 g/ml), PEU activity expressed as defined in this patent | | |

Result:

Shape stable gels with sufficient firmness at high-salt concentration were obtained. The gels were easy to spoon (not sticky, clear cut piece) and no undesired increase in viscosity upon cooling after dispersion in hot water was observed. The gels were easy to disperse in hot water.

### Example 5: Tomato/Onion soup

Concentrated Tomato/onion soup jelly preparation:

1. Onion was cut in small pieces. (1-3 cm cubes)
2. The cut onion was heated in a microwave oven until a temperature was reached above 95°C.
3. During the comminution step, sunflower oil was added and then mixed in constantly at high speed for 2 min using a kitchen blender and a comminuted onion puree was obtained..
4. An acidification step was carried out by lowering of the pH to 1.6 with 6M HCl. The pH was kept at 1.6 for 10 minutes at a temperature of 65 to75°C, and was then adjusted to pH 4.1 using 6M NaOH.
5. Fungal PME (PME Novoshape, Novozymes, Denmark) was added by mixing it into the puree and was allowed to incubate for 30 min at 50°C.
6. Comminuted tomato puree was added and the mixture was kept for 30 min at 50°C
7. The remaining ingredients as mentioned in the table below (except $CaCl_2.2H_2O$) were pre-mixed and added to the mixture resulting from step 6
8. The mixture from step 7 was heated in a microwave oven until a temperature was reached of above 80°C
9. Immediately thereafter $CaCl_2.2H_2O$ was added and mixed in
10. The product was hot filled in jars, stored at 5°C and allowed to form a gel.

The resulting gel was analysed using the protocol as described in the description.

| Table 5 | grams |
|---|---|
| Comminuted Tomato puree 2x concentrated | 270 |
| Comminuted onion | 400 |
| sun dried tomato | 40 |
| sunflower oil | 37.5 |
| PME Rapidase FP Super (from DSM)* | 0.8 |
| NaCl | 87.5 |
| Sucrose | 50 |
| SMP | 9 |
| italian herbs | 2 |
| Basil | 2 |
| chili pepper | 3 |
| Garlic | 2 |
| dried onion | 6.3 |
| CaCl2*2H2O | 7 |
| Total | 917.1 |
| | |
| Aw | 0.74 |
| Gel characteristics: | |
| Shape stability | yes |
| Firmness (g) | 99±12 |
| Brittleness (mm) | 4.8±0.6 |
| Recovery (%) | 65±2 |
| *PME Rapidase FP Super (from DSM)= 0.9 PEU/g.* PEU activity expressed as defined in the description. | |

Result:

A shape stable onion/tomato soup gel concentrate with sufficient firmness at high-salt concentration was obtained using tomato and onion for structuring. No additional hydrocolloid was required. The obtained gel was brittle and allowed good spoonability. The product was easy to disperse in hot water and did not show undesirable increase in viscosity upon cooling.

**Example 6: Effect of using potassium in combination with sodium on gel behaviour**

1. Onions were peeled and cut in pieces of about 3 cm.
2. The cut onions were heated in a microwave oven until a temperature was reached of above 95°C.
3. The heated onions were comminuted to form a puree in a kitchen blender.
4. An acidification step was conducted: the pH was reduced to 1.6 with 6M HCl, and kept at this level for 10 min at 65-75°C. Then the pH was adjusted to pH 4.1 by using 6M NaOH.
5. Fungal PME was added and mixed into the puree. The puree was kept for 30min at 50°C.
6. NaCl, KCl, $MgCl_2$ and $CaSO_4$ mixture was added and mixed into the puree
7. The end product was hot filled in jars , stored at 5°C and allowed to form a gel

The resulting gel was analysed according to the protocol in the description.

| Table 6 | |
| --- | --- |
| Added Ingredients | (wt% on total product) |
| Comminuted Onion | 84.3 |
| NaCl | 10.6 |
| KCl | 4.6 |
| $CaSO_4$ | 0.3 |
| $MgCl_2$ | 0.2 |
| PME (Novoshape, Novozymes, Denmark) | 0.08 |
| | |
| Ratio [($Na^+$/($Na^+$+$K^+$))*100 (in%)] | 63 % |
| | |
| Shape stability | Yes |
| Firmness (g) | 72±6 |
| Brittleness (mm) | 4.5±0.3 |
| Recovery (%) | 67±7 |
| *PME (Novoshape, Novozymes, Denmark) 10 PEU/ ml, PEU activity expressed as defined in this patent | |

Result:

A shape stable onion gel concentrate with sufficient firmness at high-salt concentration was obtained using onion for structuring. No additional hydrocolloid was used. In addition, less calcium cations were necessary to obtain a gel with sufficient firmness (e.g. compared to example 1c).

**Example 7: Analysis of viscosity increase upon cooling of the diluted product**

To analyse the undesired increase in viscosity upon cooling of the diluted product, a food concentrate in the form of a gel according to the invention (Example 7a) was compared to a food concentrate in the form of a gel from the prior art, using a the combination of xanthan and locust bean gum as a gelling system (comparative example7b).

Example 7a was prepared as described for Example 1c.

Comparative example 7b contains:

Table 8

| Water | 74.6% |
|---|---|
| Xanthan (GRINDSTED® 80, Danisco) | 0.3% |
| Locust bean gum (GRINDSTED® LBG 246, Danisco) | 0.3% |
| NaCl | 24.7% |
| Total | 100.0% |

Preparation of comparative example 7b:

- The Xanthan-LBG gel composition according to the recipe in Table 7 was prepared in the following way, in a Thermomix TM31 equipment (Vorwerk, Germany).

- Water was added to the equipment vessel

- All ingredients (salt, Xanthan, LBG) were added quickly (30 sec) via the vessel opening at speed 5-6.

- The mixture was heated up to 85 °C and kept at this temperature for at least 3 min while stirring (speed 5-6).

- The resulting mixture was hot filled plastic containers, cooled quiescently to gel and analysed.

Analysis of firmness and brittleness and viscosity after dilution and subsequent cooling down were conducted according to the method described in the description.

Table 9b

| | Example 7a (=Example 1c) (this invention) | Comparative example 7b (Xanthan-LBG gelling system) |
|---|---|---|
| | 3g gel dispersed in 27g water | 3g gel dispersed in 27g water |
| | | |
| Firmness (g) | 113±3 | 81±12 |
| Brittleness (mm) | 3.0±0.1 (clear breaking point) | 10.0±0.0 (no breaking point) |
| Shape stable | Yes: Brittle gel | Yes: Elastic gel |
| Viscosity at 60 °C (mPas) | 0.8±0.2 | 2.8±0.3 |
| Viscosity at 40 °C (mPas) | 0.9±0.1 | 8.3±1.2 |
| Viscosity at 20 °C (mPas) | 1.3±0.0 | 10.5±1.7 |

Result:

High-salt food concentrates in the form of a gel using xanthan-locust bean gum (Comparative example 7b), even with lower firmness(!), showed a much higher increase in viscosity over cooling of the diluted product (more then 2 times higher). For the dilution factors of 5x and 20x the same behaviour was observed (data not shown).

In addition, high-salt food concentrates according to this invention (example 7a, 1c), compared to, were more brittle and easier to scoop/spoon and faster to disperse while stirring upon dilution in hot water, compared to comparative example 7b.

**Claims**

1. Concentrate food composition in the form of a gel comprising:

   • water,
   • Sodium salt and optionally potassium salt in a total amount of from 5 wt% to 40 wt%, based on the total water content of the food composition, wherein the amount of salt is calculated as ((weight of salt)/(weight of salt + weight of total water content))*100 in %,
   • comminuted plant material,
   • from 0.3 to 10 wt% of pectin , based on the total water content of the food composition, pectin being all pectin with a degree of esterification of lower than 55%, wherein the amount of said pectin is measured as the amount of galacturonic acid (GalA), and is calculated as ((weight of GalA)/(weight of GalA + weight of total water content))*100 in %
   • calcium salt,

   wherein part of said pectin is bound to said comminuted plant material, and part of said pectin is not bound to said comminuted plant material (free pectin) and said free pectin and said bound pectin are present in a ratio of from 0.2 to 200.

2. Concentrate food composition according to claim 1, wherein at least 80% of the comminuted plant material has a size of between 10 and 1500 micrometer, as defined by mesh size.

3. Concentrate food composition according to any one of the preceding claims, wherein the comminuted plant material is selected from the group consisting of plant cells, plant cell fragments, clusters of plant cells and/or plant cell fragments, and mixtures thereof.

4. Concentrate food composition according to any one of the preceding claims, wherein the comminuted plant material is present in an amount of from 10 wt% to 91 wt% (wet weight based on the weight of the total concentrate food composition).

5. Concentrate food composition according to anyone of the preceding claims, wherein the comminuted plant material is selected from material from the group consisting of onion, carrot, broccoli, courgette, cauliflower, pea, pumpkin, leek, celeriac, shallot, garlic, potato, sweet potato, green beans, tomato and mixtures thereof.

6. Concentrate food composition according to anyone of the preceding claims, wherein the comminuted plant material is selected from material from the *Allium* family.

7. Concentrate food composition according to anyone of the preceding claims, wherein the amount of pectin with a degree of esterification of lower than 55% and which is not bound to comminuted plant material (active free pectin), is between 0.15 and 8 wt%, based on the total water content of the concentrate food composition.

8. Concentrate food composition according to anyone of the preceding claims, wherein calcium cations are present in an amount of from 0.01 to 3% wt $Ca^{2+}$, based on the total water content of the concentrate.

9. Concentrate food composition according to anyone of the preceding claims, further comprising KCl in an amount of from 0.6 to 20 wt%, based on the total water content and wherein the ratio of $[(Na^+/(Na^++K^+))*100 \text{ (in\%)}]$ is of from 15 % to 95%.

10. Concentrate food composition according to any one of the preceding claims, wherein the firmness is higher than 15 g.

11. Process to prepare a concentrate food composition according to anyone of the preceding claims, the process comprising the steps of:

    a) Providing comminuted plant material which has been heated,

b) Adding pectin methylesterase to the comminuted plant material and_allowing to incubate,
c) Inactivating the pectin methylesterase after step b),
d) Adding sodium salt and optionally potassium salt,,
e) Adding calcium salt,
f) Packaging and allowing to solidify,

wherein the process further comprises at least one of the following steps:

• adjusting the pH of the comminuted plant material to a pH of between 1 and 3, wherein this step is carried out before inactivation step c),
• adding pectin with a degree of esterification of below 55% and which is not bound to plant material,
• adding pectin with a degree of esterification of above 55% and which is not bound to plant material, wherein this step is carried out before step b).

to obtain a concentrate food composition in the form of a gel, wherein part of said pectin concentrate food composition is bound to said comminuted plant material, and part of said pectin is not bound to said comminuted plant material (free pectin) and said free pectin and said bound pectin are present in a ratio of from 0.2 to 200.

12. Process according to claim 11, wherein the sodium salt is added in an amount of from 5 to 40 wt% based on the total water content of the total resulting food composition, wherein the amount of sodium salt is calculated as ((weight of salt)/(weight of salt + weight of total water content))*100 in %

13. Process according to claim 11 or 12, wherein the calcium salt is added to achieve a total concentration of calcium ions in the resulting concentrate food composition of from 0.01 wt% to 3 wt%, based on the total water content.

14. Process according to any one of claims 11 to 13, wherein the pectin methylesterase is a fungal enzyme.

15. Use of the composition according to anyone of claims 1 to 10 to prepare a bouillon, a soup, a sauce, a gravy or a seasoned dish.

**Patentansprüche**

1. Lebensmittelkonzentratzusammensetzung in Form eines Gels, umfassend:

• Wasser,
• Natriumsalz und gegebenenfalls Kaliumsalz in einer Gesamtmenge von 5 Gew.-% bis 40 Gew.-%, bezogen auf den Gesamtwassergehalt der Lebensmittelzusammensetzung, wobei die Menge an Salz als ((Gewicht des Salzes) / (Gewicht des Salzes + Gewicht des Gesamtwassergehalts)) * 100 in % berechnet wird,
• zerkleinertes Pflanzenmaterial,
• 0,3 bis 10 Gew.-% Pektin, bezogen auf den Gesamtwassergehalt der Lebensmittelzusammensetzung, wobei Pektin das ganze Pektin mit einem Veresterungsgrad von weniger als 55% ist, wobei die Menge des genannten Pektins als die Menge an Galacturonsäure (GalA) gemessen wird und als ((Gewicht von GalA) / (Gewicht von GalA + Gewicht des Gesamtwassergehalts)) * 100 in % berechnet wird,
• Calciumsalz,

wobei ein Teil des genannten Pektins an dem zerkleinerten Pflanzenmaterial gebunden ist und ein Teil des genannten Pektins nicht an dem zerkleinerten Pflanzenmaterial gebunden ist (freies Pektin) und das freie Pektin und das gebundene Pektin in einem Verhältnis von 0,2 bis 200 vorhanden sind.

2. Lebensmittelkonzentratzusammensetzung nach Anspruch 1, wobei mindestens 80% des zerkleinerten Pflanzenmaterials eine Größe zwischen 10 und 1500 Mikrometer, wie durch Maschenweite definiert, aufweisen.

3. Lebensmittelkonzentratzusammensetzung nach irgendeinem der vorhergehenden Ansprüche, wobei das zerkleinerte Pflanzenmaterial ausgewählt ist aus der Gruppe bestehend aus Pflanzenzellen, Pflanzenzellfragmenten, Clustern von Pflanzenzellen und/oder Pflanzenzellfragmenten und Mischungen davon.

4. Lebensmittelkonzentratzusammensetzung nach irgendeinem der vorhergehenden Ansprüche, wobei das zerkleinerte Pflanzenmaterial in einer Menge von 10 Gew.-% bis 91 Gew.-% (Nassgewicht bezogen auf das Gewicht der gesamten Lebensmittelkonzentratzusammensetzung) vorhanden ist.

5. Lebensmittelkonzentratzusammensetzung nach irgendeinem der vorhergehenden Ansprüche, wobei das zerkleinerte Pflanzenmaterial ausgewählt ist aus Material aus der Gruppe bestehend aus Zwiebel, Karotte, Brokkoli, Zucchini, Blumenkohl, Erbse, Kürbis, Lauch, Sellerie, Schalotte, Knoblauch, Kartoffel, Süßkartoffel, grünen Bohnen, Tomate und Mischungen davon.

6. Lebensmittelkonzentratzusammensetzung nach irgendeinem der vorhergehenden Ansprüche, wobei das zerkleinerte Pflanzenmaterial aus Material von der Familie Allium ausgewählt ist.

7. Lebensmittelkonzentratzusammensetzung nach irgendeinem der vorhergehenden Ansprüche, wobei die Menge an Pektin mit einem Veresterungsgrad von weniger als 55% und welches nicht an zerkleinertem Pflanzenmaterial gebunden ist (aktives freies Pektin), zwischen 0,15 und 8 Gew.-%, bezogen auf den Gesamtwassergehalt der Lebensmittelkonzentratzusammensetzung, beträgt.

8. Lebensmittelkonzentratzusammensetzung nach irgendeinem der vorhergehenden Ansprüche, wobei Calciumkationen in einer Menge von 0,01 bis 3 Gew.-% $Ca^{2+}$, bezogen auf den Gesamtwassergehalt des Konzentrats, vorhanden sind.

9. Lebensmittelkonzentratzusammensetzung nach irgendeinem der vorhergehenden Ansprüche, ferner umfassend KCl in einer Menge von 0,6 bis 20 Gew.-%, bezogen auf den Gesamtwassergehalt, und wobei das Verhältnis von $[(Na^+/Na^+ + K^+)) * 100$ (in %)] 15% bis 95% beträgt.

10. Lebensmittelkonzentratzusammensetzung nach irgendeinem der vorhergehenden Ansprüche, wobei die Festigkeit größer als 15 g ist.

11. Verfahren zur Herstellung einer Lebensmittelkonzentratzusammensetzung nach irgendeinem der vorhergehenden Ansprüche, wobei das Verfahren die folgenden Schritte umfasst:

    a) Bereitstellen von zerkleinertem Pflanzenmaterial, das erhitzt worden ist,
    b) Hinzufügen von Pektinmethylesterase zu dem zerkleinerten Pflanzenmaterial und Inkubieren lassen,
    c) Inaktivieren der Pektinmethylesterase nach Schritt b),
    d) Hinzufügen von Natriumsalz und gegebenenfalls Kaliumsalz,
    e) Hinzufügen von Calciumsalz,
    f) Verpacken und Verfestigen lassen,

wobei das Verfahren ferner mindestens einen der folgenden Schritte umfasst:

    • Einstellen des pH des zerkleinerten Pflanzenmaterials auf einen pH zwischen 1 und 3, wobei dieser Schritt vor Inaktivierungsschritt c) durchgeführt wird,
    • Hinzufügen von Pektin mit einem Veresterungsgrad von weniger als 55% und welches nicht an Pflanzenmaterial gebunden ist,
    • Hinzufügen von Pektin mit einem Veresterungsgrad von über 55% und welches nicht an Pflanzenmaterial gebunden ist, wobei dieser Schritt vor Schritt b) durchgeführt wird,

um eine Lebensmittelkonzentratzusammensetzung in Form eines Gels zu erhalten, wobei ein Teil des genannten Pektins der Lebensmittelkonzentratzusammensetzung an dem zerkleinerten Pflanzenmaterial gebunden ist und ein Teil des genannten Pektins nicht an dem zerkleinerten Pflanzenmaterial gebunden ist (freies Pektin) und das freie Pektin und das gebundene Pektin in einem Verhältnis von 0,2 bis 200 vorhanden sind.

12. Verfahren nach Anspruch 11, wobei das Natriumsalz in einer Menge von 5 bis 40 Gew.-%, bezogen auf den Gesamtwassergehalt der gesamten sich ergebenden Lebensmittelzusammensetzung, zugegeben wird, wobei die Menge an Natriumsalz als ((Gewicht des Salzes) / (Gewicht des Salzes + Gewicht des Gesamtwassergehalts)) * 100 in % berechnet wird.

13. Verfahren nach Anspruch 11 oder Anspruch 12, wobei das Calciumsalz zugegeben wird, um eine Gesamtkonzentration von Calciumionen in der sich ergebenden Lebensmittelkonzentratzusammensetzung von 0,01 Gew.-% bis 3 Gew.-%, bezogen auf den Gesamtwassergehalt, zu erreichen.

**14.** Verfahren nach irgendeinem der Ansprüche 11 bis 13, wobei die Pektinmethylesterase ein Pilzenzym ist.

**15.** Verwendung der Zusammensetzung nach irgendeinem der Ansprüche 1 bis 10 zur Herstellung einer Bouillon, einer Suppe, einer Soße, einer Bratensoße oder einer gewürzten Speise.


**Revendications**

**1.** Composition alimentaire concentrée dans la forme d'un gel comprenant :

. de l'eau,
. un sel de sodium et éventuellement un sel de potassium dans une quantité totale de 5 % en masse à 40 % en masse, rapportée à la teneur totale en eau de la composition alimentaire, où la quantité de sel est calculée comme ((masse de sel/(masse de sel + masse de teneur totale en eau))* 100 en %,
. un matériau de plante broyé,
. de 0,3 à 10 % en masse de pectine, rapporté à la teneur totale en eau de la composition alimentaire, la pectine étant la totalité de pectine avec un degré d'estérification inférieur à 55 %, où la quantité de ladite pectine est mesurée comme la quantité d'acide galacturonique (GalA), et est calculée comme ((masse de GalA)/(masse de GalA + masse de teneur totale en eau))*100 en %,
. un sel de calcium,

où une part de ladite pectine est liée audit matériau de plante broyé, et une part de ladite pectine n'est pas liée audit matériau de plante broyé (pectine libre) et ladite pectine libre et ladite pectine liée sont présentes à un rapport de 0,2 à 200.

**2.** Composition alimentaire concentrée selon la revendication 1, où au moins 80 % du matériau de plante broyé présentent une dimension de 10 à 1 500 micromètres, comme défini par une dimension de tamis.

**3.** Composition alimentaire concentrée selon l'une quelconque des revendications précédentes, dans laquelle le matériau de plante broyé est choisi dans le groupe constitué de cellules de plantes, de fragments de cellules de plantes, d'amas de cellules de plantes et/ou de fragments de cellules de plantes, et de mélanges de ceux-ci.

**4.** Composition alimentaire concentrée selon l'une quelconque des revendications précédentes, dans laquelle le matériau de plante broyé est présent dans une quantité de 10 % en masse à 91 % en masse (masse humide rapportée à la masse de la composition alimentaire concentrée totale).

**5.** Composition alimentaire concentrée selon l'une quelconque des revendications précédentes, dans laquelle le matériau de plante broyé est choisi parmi un matériau du groupe constitué d'oignon, carotte, brocolis, courgette, chou-fleur, pois, potiron, poireau, céleri, échalote, ail, pomme de terre, pomme de terre douce, haricot vert, tomate et mélanges de ceux-ci.

**6.** Composition alimentaire concentrée selon l'une quelconque des revendications précédentes, dans laquelle le matériau de plante broyé est choisi parmi un matériau de la famille *Allium.*

**7.** Composition alimentaire concentrée selon l'une quelconque des revendications précédentes, dans laquelle la quantité de pectine avec un degré d'estérification inférieur à 55 % et qui n'est pas lié au matériau de plante broyé (pectine libre active), est de 0,15 à 8 % en masse, rapportée à la teneur totale en eau de la composition alimentaire concentrée.

**8.** Composition alimentaire concentrée selon l'une quelconque des revendications précédentes, dans laquelle des cations calcium sont présents dans une quantité de 0,01 à 3 % en masse de $Ca^{2+}$, rapportée à la teneur totale en eau du concentré.

**9.** Composition alimentaire concentrée selon l'une quelconque des revendications précédentes, comprenant de plus KCl dans une quantité de 0,6 à 20 % en masse, rapportée à la teneur totale en eau et où le rapport de $[(Na^+/(Na^++K^+))*100$ (en %)] est de 15 % à 95 %.

**10.** Composition alimentaire concentrée selon l'une quelconque des revendications précédentes, dans laquelle la fermeté est supérieure à 15 g.

**11.** Procédé de préparation d'une composition alimentaire concentrée selon l'une quelconque des revendications précédentes, le procédé comprenant les étapes de :

a) fourniture de matériau de plante broyé qui a été chauffé,
b) addition de pectine méthylestérase au matériau de plante broyée et incubation,
c) inactivation de la pectine méthylestérase après l'étape b),
d) addition de sel de sodium et éventuellement de sel de potassium,
e) addition de sel de calcium,
f) emballage et solidification,

dans lequel le procédé comprend de plus au moins une des étapes suivantes :

. ajustement du pH du matériau de plante broyé à un pH de 1 à 3, où cette étape est réalisée avant l'étape d'inactivation c),
. addition de pectine avec un degré d'estérification inférieur à 55 % et laquelle n'est pas liée au matériau de plante,
. addition de pectine avec un degré d'estérification supérieur à 55 % et qui n'est pas liée au matériau de plante,

où cette étape est réalisée avant l'étape b)
pour obtenir une composition alimentaire concentrée dans la forme d'un gel, où une part de ladite composition alimentaire concentrée de pectine est liée audit matériau de plante broyé, et une part de ladite pectine n'est pas liée audit matériau de plante broyé (pectine libre) et ladite pectine libre et ladite pectine liée sont présentes dans un rapport de 0,2 à 200.

**12.** Procédé selon la revendication 11, où le sel de sodium est ajouté dans une quantité de 5 à 40 % en masse rapportée à la teneur totale en eau de la composition alimentaire résultante totale, où la quantité de sel de sodium est calculée comme ((masse de sel)/(masse de sel + masse de teneur totale en eau))*100 en %.

**13.** Procédé selon la revendication 11 ou 12, où le sel de calcium est ajouté pour réaliser une concentration totale en ions calcium dans la composition alimentaire concentrée résultante de 0,01 % en masse à 3 % en masse, rapportée à la teneur totale en eau.

**14.** Procédé selon l'une quelconque des revendications 11 à 13, où la pectine méthylestérase est un enzyme fongique.

**15.** Utilisation de la composition selon l'une quelconque des revendications 1 à 10 pour préparer un bouillon, une soupe, une sauce, un jus de viande ou un plat assaisonné.

# Fig. 1

# Fig. 2a

Texture analyser (typical examples)

Firmness (g)
Breaking point

This invention

- Firmness > 15g
- Brittleness < 8mm
- Recovery < 80%

Force (g)

1st Cycle

2nd Cycle

Distance (mm)

0 mm　　　10 mm　0 mm　　　10 mm

# Fig. 2b

Purees and pastes (e.g. tomato paste, onion pastes, onion puree)

Force (g)

1st Cycle

Firmness (g)
No Breaking
Point

2nd Cycle

- Firmness > 15g (Firmer vegetable paste/puree)
- Firmness < 15g (Weak vegetable paste/puree)
- Brittleness > 8mm
- Recovery > 80%

Distance (mm)

0mm　　　10mm　0mm　　　10mm

# Fig. 2c

Elastic gels (e.g. xanthan-LBG, Xanthan carrageenan)

- Firmness > 15g (Stronger gels)
- Firmness < 15g (Weak gels)
- Brittleness > 8mm
- Recovery > 80%

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007068484 A
- EP 2468110 A
- WO 9918813 A

### Non-patent literature cited in the description

- **ENGLYST ; CUMMINGS.** *Analyst,* 1984, vol. 109 (7), 937-942
- **FILISETTI-COZZI ; CARPITA.** *Analytical Biochemistry,* 1991, vol. 197, 157-162
- Food Chemical Codex. National Academy of Science, 1981
- **WALTER et al.** *Journal of Food Science,* 1983, vol. 48, 1006-10070
- **HOU et al.** *Botanical Bulletin of Academia Sincia,* 1999, vol. 40, 115-119
- **LEVIGNE S. et al.** *Food Hydrocolloids,* 2002, vol. 16, 547-550
- **ROSENBOHM et al.** *Carbohydrate Research,* 2003, vol. 338, 637-649
- **WILLIAMS et al.** *Journal of Agricultural Food and Chemistry,* vol. 51, 1777-1781
- **STROM et al.** *Carbohydrate Polymers,* 20 June 2005, vol. 60 (4), 467-473